# FASCICULE DE BREVET EUROPEEN

(11) **EP 0 493 158 B1**
(45) Date de publication et mention de la délivrance du brevet: **15.06.1994**
(21) Numéro de dépôt: 91403258.6
(22) Date de dépôt: 02.12.1991
(51) Int. Cl.: B62D 25/08, B60K 11/04

(54) **Façade antérieure pour véhicule automobile**
Frontteil für Kraftfahrzeuge
Vehicle front part

(30) Priorité: 28.12.1990 FR 9016495
(43) Date de publication de la demande: 01.07.1992
(73) Titulaire: ECIA - EQUIPEMENTS ET COMPOSANTS POUR L'INDUSTRIE AUTOMOBILE, F-25400 Audincourt (FR)
(72) Inventeur: Peugeot, Michel, F-25230 Seloncourt (FR)
(74) Mandataire: Mestre, Jean (FR)

(56) Documents cités:
- EP-A- 0 275 575
- EP-A- 0 288 752
- EP-A- 0 346 154
- EP-A- 0 418 882
- WO-A-82/00808
- DE-A- 3 729 050
- FR-A- 2 655 605
- GB-A- 2 203 598

## Description

La présente invention concerne les véhicules automobiles et, plus particulièrement, leurs façades antérieures qui sont tout spécialement destinées à supporter notamment au moins un groupe motoventilateur avec son faisceau de câbles et son dispositif de commande.

Il est bien connu en technique automobile que la façade antérieure sert, habituellement, à réunir les flancs de la structure ou coque et des éléments de carrosserie tels que les ailes, pare-chocs, calandres. Cette façade doit aussi être à même de supporter des équipements tels que les blocs optiques, les systèmes de refroidissement du moteur thermique, les climatiseurs de l'habitacle, les avertisseurs sonores, etc. Parmi tous ces équipements figure aussi le groupe motoventilateur qui coopère avec le système de refroidissement, avec son faisceau de câbles et son dispositif de commande.

Une telle façade antérieure comprend, usuellement, un panneau avec des faces avant et arrière, transpercé d'au moins un ajour qui est bordé par une volute réunie par au moins un bras à un support destiné à recevoir un groupe motoventilateur (voir par exemple FR-A-2 655 605, document publié après la date de priorité de la présente demande).

Le processus habituel de montage d'un tel groupe motoventilateur et de ses accessoires sur une façade antérieure est le suivant. On pose le faisceau de câbles sur la face arrière rendue accessible de la façade, c'est-à-dire la face qui est habituellement tournée vers l'arrière du véhicule lorsque ce dernier circule normalement, on agrafe le faisceau de câbles du groupe motoventilateur à l'un des bras qui présente une cavité longitudinale dirigée vers l'arrière et destinée à recevoir ce faisceau, on verrouille le connecteur du groupe motoventilateur dans un réceptacle prévu à cet effet en l'engageant par la face arrière en direction de la face avant, on fait traverser le panneau au faisceau de câbles de la face arrière à la face avant en l'insérant dans des découpes. Ceci fait sur la face arrière, on retourne face pour face la façade afin de rendre accessible sa face avant. On pose et on fixe, par exemple par vissage, le ou les groupes motoventilateurs en observant que la mise en place du groupe motoventilateur risque de dégager le connecteur de son réceptacle puisque le sens de l'insertion du bornier de ce groupe dans le connecteur se fait maintenant dans le sens opposé, c'est-à-dire de l'avant vers l'arrière; on fixe par exemple par engagement élastique les constituants qui doivent demeurer accessibles et/ou interchangeables en vue de leur échange ou réparation en cas de défaillance et on vérifie que la liaison électrique entre le bornier du groupe motoventilateur et son connecteur est correcte et que ce dernier n'a pas été expulsé de son réceptacle.

On comprend que toutes ces opérations sont longues et fastidieuses et aussi compliquées puisqu'il faut procéder successivement sur les deux faces opposées de la façade; ces opérations sont en plus sujettes à malfaçons et à reprises ultérieures pour en corriger les défauts puisque les assemblages en particulier des connecteurs électriques se font dans des sens opposés et de part et d'autre de la façade.

Le but de l'invention est de remédier à la plupart des inconvénients brièvement rappelés afin que l'essentiel des opérations de montage des constituants sur la façade antérieure puisse se faire sur une seule face et, de préférence, sur la face avant sans qu'il soit nécessaire de procéder à un retournement. Grâce à la solution apportée par l'invention, il est possible de grandement automatiser l'équipement de la façade antérieure et d'accroître la fiabilité des opérations.

L'invention a pour objet une façade antérieure pour véhicule automobile destinée à supporter notamment au moins un groupe motoventilateur avec son faisceau de câbles et son dispositif de commande, et qui est constituée d'un panneau avec une face avant et une face arrière, une embase pour un coffret électrique fermé par un couvercle et destinés à recevoir le faisceau de câbles avec au moins un connecteur pour le groupe motoventilateur et pourvu, entre autres, d'au moins un ajour bordé par un carénage qui est réuni par au moins un bras à un support destiné à recevoir le groupe motoventilateur. Cette façade est caractérisée en ce que le support est muni sur la face avant d'un réceptacle ouvert sur la face avant et fermé sur la face arrière pour recevoir le connecteur et d'au moins un ancrage accessible sur la face avant pour la fixation du groupe motoventilateur, en ce que l'un au moins des bras se présente à la manière d'un logement en U ouvert sur la face avant pour recevoir le faisceau de câbles, en ce que ce carénage est transpercé d'un passage dans le prolongement de ce logement pour diriger le faisceau de câbles vers l'embase, en ce que ce couvercle est muni d'au moins un opercule pour clore partiellement ce passage sans solution de continuité du carénage et en ce qu'un obturateur est associé au bras pour clore son logement et présente une surface apparente configurée pour ne pas perturber l'écoulement d'air et des moyens de retenue pour le maintenir sur le panneau.

D'autres caractéristiques de l'invention apparaîtront à la lecture de la description et des revendications qui suivent ainsi qu'à l'examen du dessin annexé, donné seulement à titre d'exemple, où :
- la Figure 1 est une vue perspective cavalière schématique d'une partie antérieure de véhicule équipée d'un mode de réalisation d'une façade antérieure perfectionnée suivant l'invention;
- les Figures 2 et 3 sont des vues de détail de la Figure 1;
- la Figure 4 est une vue perspective de l'arrière d'un détail de la Figure 1; et
- les Figures 5 et 6 sont des sections locales du bras montrant des variantes d'exécution.

Les parties antérieures de véhicule et leurs façades antérieures étant bien connues dans la technique, on ne décrira par la suite que ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans ce qui suit, un même numéro de référence identifie toujours un élément homologue, quel que soit le mode de réalisation ou sa variante.

Pour la commodité de l'exposé, on décrira successivement chacun des constituants de l'invention avant d'en exposer la mise en oeuvre.

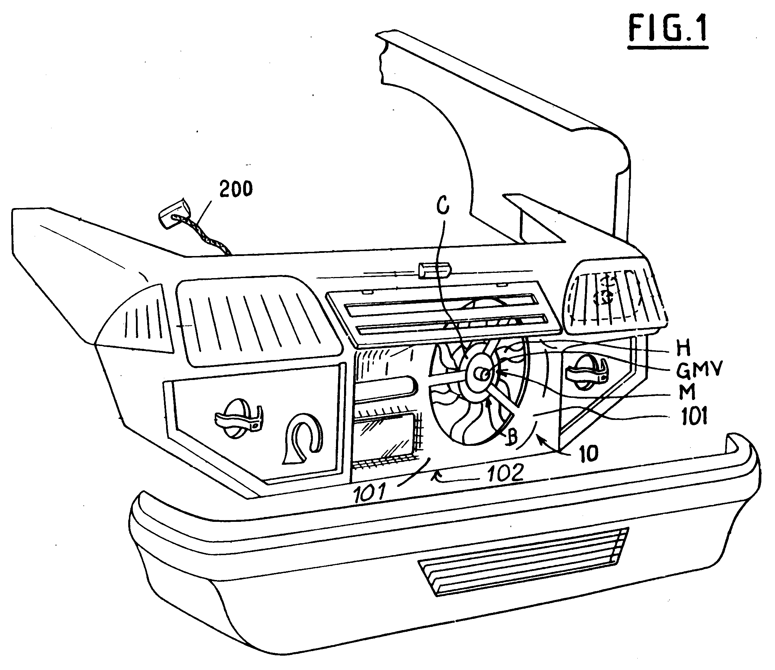

Comme on le voit en particulier sur la Figure 1, la partie antérieure d'un véhicule automobile est équipée d'une façade antérieure perfectionnée selon l'invention, destinée à supporter notamment au moins un groupe motoventilateur avec son faisceau de câbles et son dispositif de commande.

Cette façade antérieure est constituée, essentiellement, d'un panneau 10 avec une face avant 101 et une face arrière 102, l'avant et l'arrière étant repérés par rapport au sens normal de déplacement du véhicule.

Cette façade est aussi munie sur sa face avant 101 d'une embase 20 pour un coffret électrique 21 fermé par un couvercle 22. Ce coffret 21 et ce couvercle 22 sont destinés à recevoir un faisceau de câbles 200 avec au moins un connecteur 201 pour le groupe motoventilateur GMV.

Ce groupe motoventilateur comprend, essentiellement, comme il est classique une hélice H entraînée par un moteur M dont la carcasse C est munie par exemple d'un bornier B destiné à recevoir le connecteur 201.

Le panneau 10 est pourvu, entre autres, d'au moins un ajour 30 bordé par un carénage 31 réuni par au moins un bras 32 à un support 33 destiné à recevoir le groupe motoventilateur. Comme il est classique, l'hélice du groupe motoventilateur tourne à l'intérieur carénage 31 en forme de collerette, qui constitue un carénage destiné à améliorer les performances du groupe motoventilateur.

Le groupe motoventilateur est fixé sur le support 33 par toutes techniques appropriées, par exemple par vissage, comme on le comprendra par la suite.

Comme on peut l'observer, le support 33 est muni sur la face avant 101 d'un réceptacle 331 ouvert sur la face avant 101 et fermé sur la face arrière 102. Ce réceptacle est destiné à recevoir le connecteur 201. Ce support 33 est aussi muni d'un ancrage 332 accessible sur la face avant 101 pour la fixation du groupe motoventilateur. Cet ancrage 332 est fait par exemple d'au moins un trou taraudé directement dans le support 33 ou dans un prisonnier incorporé à ce dernier.

L'un au moins des bras 32 se présente à la manière d'un logement 320 en U ouvert sur la face avant 101 et destiné à recevoir le faisceau de câbles 200.

Le carénage 31 est transpercé d'un passage 310 dans le prolongement du logement 320 afin de diriger le faisceau de câbles vers l'embase 20, comme on le comprendra par la suite.

Le couvercle 22 est muni d'au moins un opercule 220 agencé pour clore partiellement le passage 310, sans solution de continuité du carénage 31, lorsqu'il est mis en place sur le coffret électrique 21 de l'embase 20.

Un obturateur 40 est associé au bras 32 pour clore son logement 320. Cet obturateur 40 présente une surface 41 apparente, configurée pour ne pas perturber l'écoulement d'air lors du fonctionnement du groupe motoventilateur. Cet obturateur est aussi muni de moyens de retenue 42 pour le maintenir sur le panneau 10.

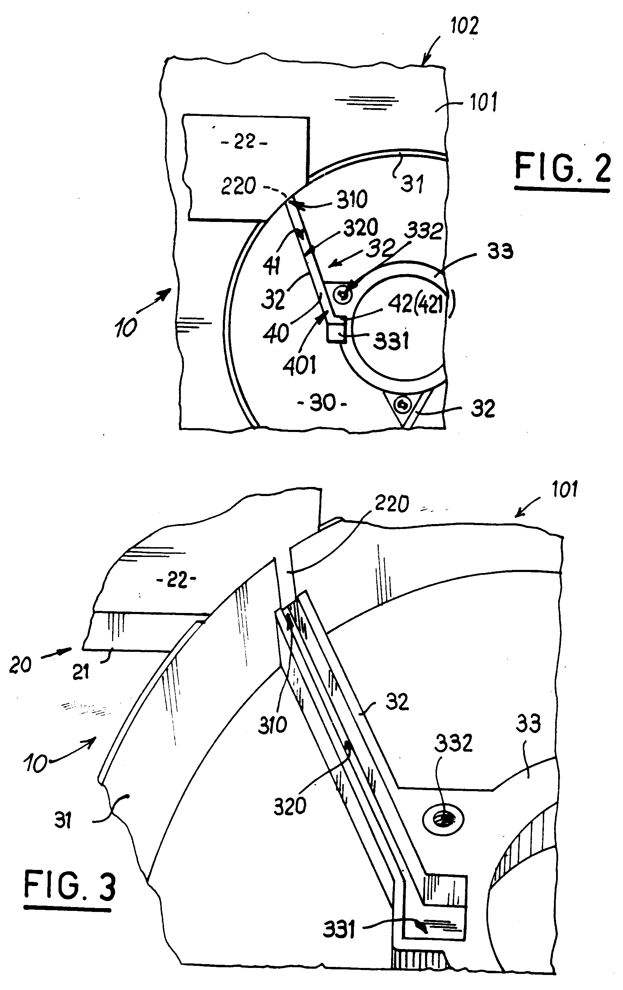

Selon une variante d'exécution (Figure 2), l'obturateur 40 se présente sous la forme d'une barrette 401 qui est, de préférence, munie à chacune de ses extrémités de pattes 421 qui jouent le rôle des moyens de retenue 42. L'une de ces pattes 421 est destinée à coopérer avec l'opercule 220 du couvercle et l'autre avec le groupe motoventilateur, lorsque ceux-ci sont mis en place sur le panneau. Ces pattes sont ainsi retenues prisonnières et maintiennent la barrette en place.

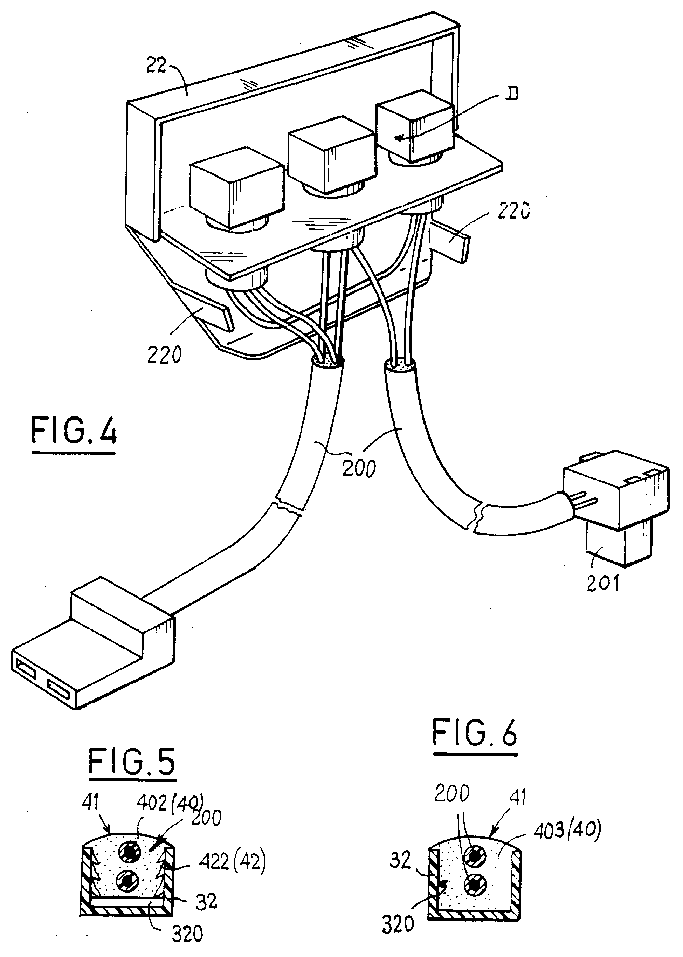

Selon une autre variante d'exécution (Figure 5), l'obturateur 40 est constitué directement par une gaine 402 du faisceau de câbles 200. Cette gaine est bordée latéralement par des lamelles 422 élastiques d'encliquetage ou analogues qui servent de moyens de retenue 42.

Selon une autre variante d'exécution (Figure 6), l'obturateur 40 est constitué par un joint 403 injecté directement dans le logement 320 en U du bras 32 après mise en place dans ce logement du faisceau de câbles 200. Les moyens de retenue 42 sont alors constitués par l'adhérence de ce joint au logement.

De préférence, le couvercle 22 et le faisceau de câbles 200 sont solidaires l'un de l'autre et le couvercle porte par exemple des composants électriques du dispositif de commande D du groupe motoventilateur.

Pour procéder à l'équipement d'une façade antérieure perfectionnée selon l'invention, on opère comme indiqué par la suite.

La façade antérieure est initialement orientée de manière que sa face avant 101 soit accessible.

On met en place le coffret électrique 21 dans l'embase 20 puis on dépose le faisceau de câbles dans le logement en U de l'un des bras de manière que le couvercle 22 puisse être monté sur le coffret électrique 21 et le connecteur 201 puisse être placé dans le réceptacle 331.

Dans le présent contexte, on entend "fermé" sur la face arrière, un réceptacle quine permet l'insertion du connecteur qu'il doit recevoir que par la face avant, la face arrière servant d'appui, que cette face arrière du réceptacle soit continue ou non. On dispose alors la barrette obturateur sur le bras pour en clore le logement en veillant à ce que ses pattes soient correctement engagées sous l'opercule et sur le support. On met ensuite en place le groupe motoventilateur et on le fixe par exemple par vissage. De manière à ce que la liaison électrique puisse se faire à coup sûr sans difficulté entre le faisceau de câbles et le groupe motoventilateur, le connecteur jouit de préférence d'un certain degré de liberté latérale dans son réceptacle de manière que le bornier et le connecteur puissent se joindre et s'engager facilement. On observera que le connecteur reposant dans son réceptacle fermé sur la face arrière, la mise en place du groupe motoventilateur et l'engagement de son bornier ne risquent pas de dégager le connecteur de son réceptacle.

De préférence, le couvercle et le faisceau de câbles sont solidaires l'un de l'autre.

Comme indiqué, quelle que soit la variante d'exécution de l'obturateur 40, sa surface 41 apparente est toujours conçue de manière à ne pas gêner le fonctionnement du groupe motoventilateur ou autrement amoindrir ses performances par exemple en induisant des pertes de charge ou en générant des sifflements.

Lorsqu'on utilise un obturateur qui est fait directement par la gaine du faisceau de câbles, on observera que l'on assure la fixation des câbles sans pièce supplémentaire tout en garantissant leur isolement électrique.

Lorsqu'on utilise la variante d'éxécution d'un obturateur fait à l'aide d'un joint injecté, on utilise une substance synthétique dont la polymérisation génère un gonflement de la matière. Dans ce cas, le volume initial de matière injectée est choisi afin de recréer une surface apparente dont le profil est celui qui convient aux performances aérauliques du groupe motoventilateur. Ici encore cette solution assure la fixation des câbles sans pièce supplémentaire et garantit leur isolement électrique.

De ce qui précède, on saisit immédiatement tous les avantages apportés par la solution selon l'invention.

On observera qu'on obtient des gains de temps appréciables au montage du fait de la réduction des manipulations nécessaires pour l'équipement de cette façade antérieure, et qu'on facilite aussi les interventions de réparation et d'entretien sans avoir à déposer cette façade antérieure puisque l'accès à tous les constituants qu'elle porte se fait uniquement par la face avant.

Outre ceci, on observe que l'on obtient une liaison électrique sans faille ainsi qu'une protection des câbles électriques tout en conservant les caractéristiques aérauliques du groupe motoventilateur.

## Revendications

1. Façade antérieure pour véhicule automobile destinée à supporter notamment au moins un groupe motoventilateur avec son faisceau de câbles et son dispositif de commande, et constituée d'un panneau (10) avec une face avant (101) et une face arrière (102), une embase (20) pour un coffret électrique (21) fermé par un couvercle (22) et destinés à recevoir le faisceau de câbles (200) avec au moins un connecteur (201) pour le groupe motoventilateur et pourvu, entre autres, d'un ajour (30) bordé par un carénage (31) qui est réunie par au moins un bras (32) à un support (33) destiné à recevoir le groupe motoventilateur, caractérisée en ce que ce support (33) est muni sur la face avant (101) d'un réceptacle (331) ouvert sur la face avant (101) et fermé sur la face arrière (102) pour recevoir le connecteur (201) et d'au moins un ancrage (332) accessible sur la face avant (101) pour la fixation du groupe motoventilateur, en ce que l'un au moins des bras (32) se présente à la manière d'un logement (320) en U ouvert sur la face avant (101) pour recevoir le faisceau de câbles (200), en ce que ce carénage (31) est transpercée d'un passage (310) dans le prolongement de ce logement (320) pour diriger le faisceau de câbles (200) vers l'embase (20), en ce que ce couvercle (22) est muni d'au moins un opercule (220) pour clore partiellement ce passage (310) sans solution de continuité du carénage (31) et en ce qu'un obturateur (40) est associé au bras (32) pour clore son logement (320) et présente une surface (41) apparente configurée pour ne pas perturber l'écoulement d'air et des moyens de retenue (42) pour le maintenir sur le panneau (10).

2. Façade selon la revendication 1, caractérisée en ce que l'obturateur (40) est une barrette (401).

3. Façade selon la revendication 2, caractérisée en ce que les moyens de retenue (42) sont des pattes (421) situées à chacune des extrémités de la barrette (401) et destinées à coopérer l'une avec l'opercule (220) du couvercle (22) et l'autre avec le groupe motoventilateur.

4. Façade selon la revendication 1, caractérisée en ce que l'obturateur (40) est une gaine (402) du faisceau de câbles (200).

5. Façade selon la revendication 2 ou 4, caractérisée en ce que les moyens de retenue (42) sont des lamelles (422) élastiques d'encliquetage.

6. Façade selon la revendication 1, caractérisée en ce que l'obturateur (40) est un joint (403) injecté.

7. Façade selon l'une quelconque des revendications 1 à 6, caractérisé en ce que le couvercle (22) et le faisceau de câbles (200) sont solidaires l'un de l'autre.

## Patentansprüche

1. Frontteil für ein Kraftfahrzeug, das dazu bestimmt ist, insbesondere mindestens einen Lüftersatz mit seinem Kabelbündel und seiner Steuervorrichtung zu tragen, und aus einer Platte (10) besteht, die eine Vorseite (101) und eine Rückseite (102) und eine Sitzfläche (20) für einen mit einem Dekkel (22) verschlossenen elektrischen Kasten (21), der zur Aufnahme des Kabelbündels (200) mit mindestens einem Verbinder (201) für den Lüftersatz bestimmt ist, und unter anderem eine Öffnung (30) besitzt, die mit einer Verkleidung (31) umrandet ist, die durch mindestens einen Arm (32) mit einem zur Aufnahme des Lüftersatzes bestimmten Träger (33) verbunden ist, dadurch gekennzeichnet, daß dieser Träger (33) auf seiner Vorderseite (101) mit einem auf der Vorderseite (101) offenen und auf der Rückseite (102) geschlossenen Behälter (331) zur Aufnahme des Verbinders (201) und mit mindestens einer auf der Vorderseite (101) zugänglichen Verankerung (332) für die Befestigung des Lüftersatzes versehen ist, daß mindestens einer der Arme (32) eine Aufnahme (320) in Form eines auf der Vorderseite (101) offenen U zum Aufnehmen des Kabelbündels (200) bildet, daß diese Verkleidung in der Verlängerung dieser Aufnahme (320) einen Durchgang (310) für die Zuführung des Kabelbündels (200) zur Sitzfläche (20) aufweist, daß dieser Deckel (22) mit mindestens einer Abdeckung (220) zum partiellen Verschließen dieses Durchgangs (310) ohne Unterbrechung der Durchgängigkeit der Verkleidung (31) versehen ist und daß ein Verschlußorgan (40) dem Arm (32) zum Verschließen seiner Aufnahme (320) zugeordnet ist und eine sichtbare Fläche (41), die so gestaltet ist, daß die Luftströmung nicht gestört wird, und Rückhalteeinrichtungen (42) für seinen Halt auf der Platte (10) besitzt.

2. Frontteil nach Anspruch 1, dadurch gekennzeichnet, daß das Verschlußorgan (40) eine Leiste (401) ist.

3. Frontteil nach Anspruch 2, dadurch gekennzeichnet, daß die Rückhalteeinrichtungen (42) Lappen (421) sind, die an jedem der Enden der Leiste (401) angeordnet sind und deren einer zum Zusammenwirken mit der Abdeckung (220) des Deckels (22) und deren anderer zum Zusammenwirken mit dem Lüftersatz bestimmt ist.

4. Frontteil nach Anspruch 1, dadurch gekennzeichnet, daß das Verschlußorgan ein Mantel des Kabelbündels (200) ist.

5. Frontteil nach Anspruch 2 oder 4, dadurch gekennzeichnet, daß die Rückhalteeinrichtungen elastische Einrastlamellen (422) sind.

6. Frontteil nach Anspruch 1, dadurch gekennzeichnet, daß das Verschlußorgan (40) eine eingespritzte Dichtung (403) ist.

7. Frontteil nach einem der Ansprüche 1 bis 6, dadurch gekennzeichnet, daß der Deckel (22) und das Kabelbündel (200) miteinander fest verbunden sind.

## Claims

1. Front structure for a motor vehicle, intended to suppport, in particular, at least one motorized fan unit with its bundle of cables and its control device, and which consists of a panel (10) with a front face (101) and a rear face (102), a base part (20) for an electric chest (21) which is closed by a cover (22) and which are intended to receive the bundle of cables (200) with at least one connector (201) for the motorized fan unit and this panel is provided, inter alia, with an opening (30) bordered by a cowl (31) which is joined by at least one arm (32) to a support (33) intended to receive the motorized fan unit; characterized in that this support (33) is equipped, on the front face (101) with a receptacle (331) open on the front face (101) and closed on the rear face (102) in order to receive the connector (201), and with at least one anchoring point (332) which is accessible on the front face (101) in order to fasten the motorized fan unit; in that at least one of the arms (32) is like a U-shaped housing (320) open on the front face (101) in order to receive the bundle of cables (200); in that this cowl (31) is pierced right through with a passage (310) in the extension of this housing (320) in order to direct the bundle of cables (200) towards the base (20); in that this cover (22) is equipped with at least one cover piece (220) for partially closing this passage (310) without discontinuity of the cowl (31); and in that a shutter (40) is associated with the arm (32) in order to close its housing (320) and exhibits a visible surface (41) which is configured so that it does not disturb the airflow, and retention means (42) for holding it on the panel (10).

2. Structure according to Claim 1, characterized in that the stopper (40) is a small rod (401).

3. Structure according to Claim 2, characterized in that the retention means (42) are tabs (421) located at each of the ends of the small rod (401) and intended to interact, one of them with the cover piece (220) of the cover (22), and the other with the motorized fan unit.

4. Structure according to Claim 1, characterized in that the closure part (40) is a sheath (402) of the bundle of cables (200).

5. Structure according to Claim 2 or 4, characterized in that the retention means (42) are thin elastic clip-in strips (422).

6. Structure according to Claim 1, characterized in that the stoppper part (40) is an injected seal (403).

7. Structure according to any one of Claims 1 to 6, characterized in that the cover (22) and the bundle of cables (200) are secured to one another.
